# EUROPEAN PATENT APPLICATION

(11) **EP 4 752 967 A1**
(43) Date of publication of application: **03.06.2026**
(21) Application number: 24860325.0
(22) Date of filing: 23.08.2024
(51) Int. Cl.: H01M 4/36, H01M 4/505, H01M 4/525, C01G 53/00, H01M 4/131, H01M 10/052, H01M 4/02

(54) **CATHODE ACTIVE MATERIAL, METHOD FOR MANUFACTURING SAME, AND CATHODE AND LITHIUM SECONDARY BATTERY COMPRISING SAME**

(30) Priority: 01.09.2023 KR 20230116360
(71) Applicant: LG Chem, Ltd., Seoul 07336 (KR)
(72) Inventor: WON, Jae Hee, Daejeon 34122 (KR); KIM, Won Tae, Daejeon 34122 (KR); KIM, Jun Gil, Daejeon 34122 (KR); LIM, Young Geun, Daejeon 34122 (KR); KIM, Ju Hyun, Daejeon 34122 (KR)
(74) Representative: Hoffmann Eitle
(86) International application number: PCT/KR2024/012573
(87) International publication number: WO 2025/048405

(57) **Abstract**

The present invention relates to a positive electrode active material capable of improving the performance of a lithium secondary battery, wherein the positive electrode active material includes a lithium composite transition metal oxide including both a Li₂MnO₃ phase and a LiMO₂ (in this case, M is an element including Ni, Mn, or a combination thereof) phase; and a coating layer including a compound composed of vanadium (V) and oxygen (O) on the lithium composite transition metal oxide, wherein the lithium composite transition metal oxide has a composition represented by Formula 1 described in the present specification, and the content of vanadium (V) included in the coating layer is 90 ppm to 2,500 ppm based on the total weight of the lithium composite transition metal oxide, and relates to a preparation method thereof, and a positive electrode and a lithium secondary battery including the same.

## Description

### TECHNICAL FIELD

### Cross-reference to Related Applications

This application claims the benefit of Korean Patent Application No. 10-2023-0116360, filed on September 1, 2023, in the Korean Intellectual Property Office, the disclosure of which is incorporated herein in its entirety by reference.

### Technical Field

The present invention relates to a positive electrode active material, a preparation method thereof, and a positive electrode and a lithium secondary battery including the same.

### BACKGROUND ART

A lithium secondary battery is composed of 4 components, which are a positive electrode, a negative electrode, a separator, and an electrolyte. Among the above-described components, a positive electrode active material included in the positive electrode is a material which plays a role in determining the capacity, output, and lifespan of the battery. In order for the lithium secondary battery to have a high energy density, output, and lifespan, it is necessary to improve the performance of the positive electrode active material, and as a result, a lot of research has been underway to develop a high-performance positive electrode active material in recent years.

A lithium (Li)-rich layered oxide, which is a type of positive electrode active material, is a mixed phase of a Li₂MnO₃ phase and a LiMO₂ (in this case, M is an element including Ni, Mn, Co, or a combination thereof) phase, and has properties of providing a very large capacity of 250 mAh/g at a high operating voltage (>3.5 V vs. Li/Li⁺). Accordingly, the Li-rich layered oxide has attracted attention as a high-capacity positive electrode active material.

However, the Li-rich layered oxide has problems due to the structural properties that two phases are mixed. Specifically, if a battery including the Li-rich layered oxide is driven under a high voltage, there is a problem in that irreversible capacity loss occurs in the first formation process, which degrades efficiency, and there are problems in that the structure changes from a layered structure to a spinel structure and then to a rock salt structure while a charge/discharge cycle is performed, which causes voltage fading, resistance increase, O₂ gas generation, and the like.

In addition, the price increase of a cobalt raw material included in the Li-rich layered oxide has also emerged as an important issue. The cobalt raw material is expected to continuously increase in price, and accordingly, there is a demand for the development of a positive electrode active material with a reduced cobalt content.

Therefore, there is a need to secure technology for improving the capacity properties, resistance properties, lifespan properties, and economic feasibility of the Li-rich layered oxide.

### [Prior Art Document]

### [Patent Document]

(Patent Document 1) Korean Patent Laid-Open Publication No. 10-2014-0025102

### DISCLOSURE OF THE INVENTION

### TECHNICAL PROBLEM

In order to solve the above-described problems, the present invention is to provide a positive electrode active material and a method for preparing the same, which are capable of improving the capacity properties, resistance properties, and lifespan properties of a battery and reducing costs.

In addition, the present invention is to provide a positive electrode and a secondary battery, which include the above-described positive electrode active material, thereby having excellent capacity properties and resistance properties, a relatively low resistance increase rate, and being economical.

### TECHNICAL SOLUTION

(1) The present invention provides a positive electrode active material which includes a lithium composite transition metal oxide including both a Li₂MnO₃ phase and a LiMO₂ (in this case, M is an element including Ni, Mn, or a combination thereof) phase, and a coating layer including a compound composed of vanadium (V) and oxygen (O) on the lithium composite transition metal oxide, wherein the lithium composite transition metal oxide has a composition represented by Formula 1 below, and the content of vanadium (V) included in the coating layer is 90 ppm to 2,500 ppm based on the total weight of the lithium composite transition metal oxide.

   [Formula 1] Li₁₊ₓNiₐMn_{b}M¹_{c}O₂

   In Formula 1 above, M¹ is one or more selected from the group consisting of Zr, Al, Re, V, Cr, Fe, Ga, Si, B, Ru, Ti, Nb, Mo, Mg, W, Na, and Pt, and 0<x≤0.5, 0<a≤0.5, 0.5≤b<1, and 0≤c≤0.01.
(2) In (1) above, the present invention provides a positive electrode active material, wherein the lithium composite transition metal oxide has a composition represented by Formula 2 below.

   [Formula 2] αLi₂Mn₍₁₋ₚ₎M²ₚO₃ ·βLiNi_{q}MnᵣM²ₛO₂

   In Formula 2 above, M² is one or more selected from the group consisting of Zr, Al, Re, V, Cr, Fe, Ga, Si, B, Ru, Ti, Nb, Mo, Mg, W, Na, and Pt, and 0<a≤0.5, 0<β≤1, 0≤p≤0.01, 0<q≤0.8, 0<r≤0.8, 0≤s≤0.01, and q+r+s=1.
(3) In (1) or (2) above, the present invention provides a positive electrode active material, wherein the b is 0.5 to is 0.75.
(4) In any one of (1) to (3) above, the present invention provides a positive electrode active material, wherein the coating layer includes V₂O₅.
(5) In any one of (1) to (4) above, the present invention provides a positive electrode active material, wherein the content of the coating layer is 0.01 parts by weight to 0.1 parts by weight based on 100 parts by weight of the lithium composite transition metal oxide.
(6) In any one of (1) to (5) above, the present invention provides a positive electrode active material, wherein the positive electrode active material has an average particle diameter (D₅₀) of 1.0 µm to 15.0 µm.
(7) The present invention provides a method for preparing a positive electrode active material, the method including (A) mixing and then firing a composite transition metal hydroxide and a lithium (Li)-containing raw material to prepare a lithium composite transition metal oxide, and (B) mixing and then heat-treating the lithium composite transition metal oxide and a vanadium (V)-containing raw material to form a coating layer including a compound composed of vanadium (V) and oxygen (O) on the lithium composite transition metal oxide, wherein the heat-treatment is performed at a temperature of 400 °C to 600 °C.
(8) In (7) above, the present invention provides a method for preparing a positive electrode active material, wherein the vanadium (V)-containing raw material is V₂O₅.
(9) In (7) or (8) above, the present invention provides a method for preparing a positive electrode active material, wherein the vanadium (V)-containing raw material is mixed such that the content of vanadium (V) is 100 ppm to 2,500 ppm based on the total weight of the lithium composite transition metal oxide.
(10) In any one of (7) to (9) above, the present invention provides a method for preparing a positive electrode active material, wherein in Step (B), the heat-treatment is performed under an oxygen atmosphere.
(11) In any one of (7) to (10) above, the present invention provides a method for preparing a positive electrode active material, wherein the coating layer includes V₂O₅.
(12) The present invention provides a positive electrode including the positive electrode active material according to any one of (1) to (6) above.
(13) The present invention provides a lithium secondary battery including the positive electrode according to (12) above.

### ADVANTAGEOUS EFFECTS

A positive electrode active material of the present invention includes a lithium composite transition metal oxide including both a Li₂MnO₃ phase and a LiMO₂ (in this case, M is an element including Ni, Mn, or a combination thereof) phase, and a coating layer including a compound composed of vanadium (V) and oxygen (O) on the lithium composite transition metal oxide, wherein the content of vanadium (V) included in the coating layer satisfies a specific numerical range, so that an effect of improving lithium ion absorption and release performance, electrical conductivity and structural stability is implemented. Accordingly, it is possible to improve the performance of the positive electrode active material, and a positive electrode and a lithium secondary battery which includes the same, for example, capacity properties, resistance properties, lifespan properties, and the like, and there is an effect of reducing costs.

In addition, according to a method for preparing a positive electrode active material of the present invention, the above-described positive electrode active material may be effectively prepared.

### BRIEF DESCRIPTION OF THE DRAWING

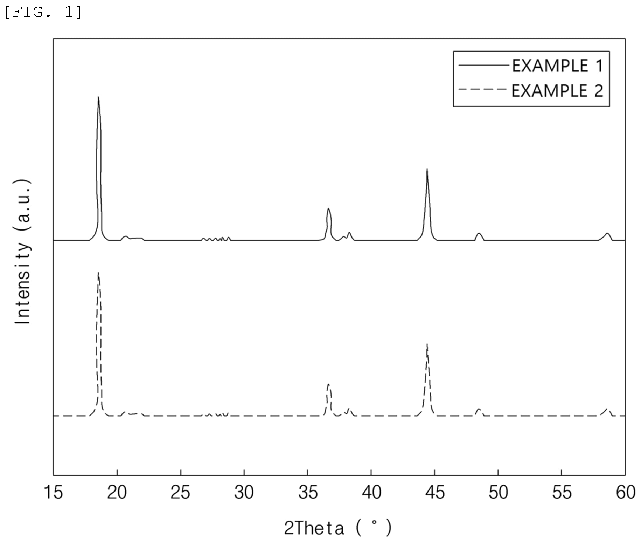

FIG. 1 is XRD data of positive electrode active materials respectively prepared in Examples 1 and 2.

### BEST MDOE FOR CARRYING OUT THE INVENTION

Hereinafter, the present invention will be described in more detail to facilitate understanding of the present invention.

It will be understood that terms or words used in the present specification and claims shall not be construed as being limited to having meanings defined in commonly used dictionaries, but should be interpreted as having meanings and concepts consistent with the technical idea of the present invention based on the principle that an inventor may appropriately define concepts of the terms to best explain the invention.

In the present specification, it should be understood that the term 'include,' 'comprise,' or 'have' is intended to specify the presence of stated features, numbers, steps, elements, or combinations thereof, but do not preclude the presence or addition of one or more other features, numbers, steps, elements, or combinations thereof.

In the present specification, the term 'on' includes not only a case in which a certain component is formed directly on an upper surface of another component, but also a case in which a third component is interposed therebetween.

In the present specification, the 'average particle diameter (D₅₀)' may be defined as a particle diameter corresponding to 50% of the cumulative volume distribution in a particle size distribution curve of (graph curve of particle size distribution) of each particle. The average particle diameter may be measured by dispersing powder to be measured in a dispersion medium, and then introducing the mixture into a commercially available laser diffraction particle size measurement device (for example, S3500 of Microtrac Co., Ltd.) to calculate a particle size distribution by measuring the difference in diffraction pattern according to a particle size when particles pass through a laser beam, and then calculating the particle diameter at a point of 50% in a volume cumulative distribution according to a particle diameter in the measurement device, thereby measuring D₅₀.

### Positive electrode active material

Hereinafter, a positive electrode active material according to the present invention will be described.

The positive electrode active material according to the present invention includes a lithium composite transition metal oxide including both a Li₂MnO₃ phase and a LiMO₂ (in this case, M is an element including Ni, Mn, or a combination thereof) phase, and a coating layer including a compound composed of vanadium (V) and oxygen (O) on the lithium composite transition metal oxide, wherein the lithium composite transition metal oxide has a composition represented by Formula 1 below, and the content of vanadium (V) included in the coating layer is 90 ppm to 2,500 ppm based on the total weight of the lithium composite transition metal oxide.

[Formula 1] Li₁₊ₓNiₐMn_{b}M¹_{c}O₂

In Formula 1 above, M¹ is one or more selected from the group consisting of Zr, Al, Re, V, Cr, Fe, Ga, Si, B, Ru, Ti, Nb, Mo, Mg, W, Na, and Pt, and 0<x≤0.5, 0<a≤0.5, 0.5≤b<1, and 0≤c≤0.01.

A lithium (Li)-rich layered oxide, which is a type of positive electrode active material, is a mixed phase of a Li₂MnO₃ phase and a LiMO₂ (in this case, M is an element including Ni, Mn, Co, or a combination thereof) phase, and if the lithium (Li)-rich layered oxide includes Co, the Co acts as an impurity, so that there are problems in that capacity properties of a secondary battery including the Li-rich layered oxide are degraded, and manufacturing costs are high.

In order to solve the above-described problems, the present inventors have repeatedly conducted research, and as a result, have confirmed that if a Li-rich layered oxide does not include Co, but includes a coating layer including a compound composed of vanadium (V) and oxygen (O), lithium ion absorption and release performance may be improved, thereby improving capacity properties, electrical conductivity may be improved, thereby improving resistance properties, and structural stability may be improved, thereby improving lifespan properties. Accordingly, the present inventors have found that capacity properties, resistance properties, lifespan properties, and economic feasibility of a typical Li-rich layered oxide may be improved, and have completed the present invention.

The M¹ is a doping element, and specifically, the M¹ may be one or more selected from the group consisting of Zr, Al, Re, V, Cr, Fe, Ga, Si, B, Ru, Ti, Nb, Mo, Mg, W, Na, and Pt. Although not necessarily included, if the M¹ is included in an appropriate amount, the particle shape of the positive electrode active material may be improved, and the stability of the crystal structure may be improved.

The x may be greater than 0, 0.1 or greater, 0.2 or greater, or 0.3 or greater, and may be 0.4 or less, or 0.5 or less. If the x satisfies the above-described range, the Li₂MnO₃ phase and the LiMO₂ phase may be formed in an appropriate ratio, thereby implementing high-capacity properties.

The a may be greater than 0, 0.2 or greater, or 0.3 or greater, and may be 0.4 or less, or 0.5 or less. If the a satisfies the above-described range, a high energy density may be exhibited, thereby implementing high-capacity properties.

The b may be 0.5 or greater, or 0.55 or greater, and may be 0.6 or less, 0.7 or less, 0.8 or less, 0.9 or less, or less than 1. If the b satisfies the above-described range, a high energy density may be exhibited, thereby implementing high-capacity properties. Particularly, if the b is 0.5 to 0.75, the Li₂MnO₃ phase and the LiMO₂ phase may be formed in an appropriate ratio, thereby implementing high-capacity properties.

The c may be 0 or greater, or 0.003 or greater, and may be 0.005 or less, 0.007 or less, or 0.01 or less. If the c satisfies the above-described range, the particle shape of the positive electrode active material may be improved, and the stability of the crystal structure may be improved.

The lithium composite transition metal oxide may not include cobalt (Co) in the lithium composite transition metal oxide. In this case, there is an effect of reducing costs, and the performance of a lithium secondary battery may be improved without including cobalt.

According to the present invention, the content of vanadium (V) included in the coating layer may be 90 ppm to 2,500 ppm based on the total weight of the lithium composite transition metal oxide. Specifically, the content of vanadium (V) included in the coating layer may be, based on the total weight of the lithium composite transition metal oxide, 90 ppm or greater, and may be 950 ppm or less, 1,950 ppm or less, 2,000 ppm or less, or 2,500 ppm or less. If the content of vanadium (V) is within the above-described range, the coating layer formed on the lithium composite transition metal oxide may improve electrical conductivity, and may reduce a side reaction between the positive electrode active material and an electrolyte solution, thereby improving capacity properties, resistance properties, and lifespan properties of a battery including the positive electrode active material. If the content of vanadium (V) is less than 90 ppm, there are problems in that the coating layer is not sufficiently formed on the lithium composite transition metal oxide, thereby deteriorating electrical conductivity, a side reaction between the positive electrode active material and an electrolyte solution is not reduced, thereby deteriorating lifespan properties, and if the content of vanadium (V) is greater than 2,500 ppm, there are problems in that the coating layer is excessively and non-uniformly formed, thereby rather acting as resistance, and lifespan properties are deteriorated.

The coating layer including a compound composed of vanadium (V) and oxygen (O) may be in a form of partially covering at least a portion on the lithium composite transition metal oxide, that is, a region on the lithium composite transition metal oxide, or covering the entire region. The shape of the coating layer may be an island type, a film type, or a combination thereof, but the shape of the coating layer is not limited thereto.

The structure of the coating layer including a compound consisting of vanadium (V) and oxygen (O) may be a layered structure, an olivine structure, an orthorhombic structure, a monoclinic structure, or the like, but is not a spinel structure.

According to an embodiment of the present invention, the lithium composite transition metal oxide may have a composition represented by Formula 2 below.

[Formula 2] αLi₂Mn₍₁₋ₚ₎M²ₚO₃ ·βLiNi_{q}MnᵣM²ₛO₂

In Formula 2 above, M² is one or more selected from the group consisting of Zr, Al, Re, V, Cr, Fe, Ga, Si, B, Ru, Ti, Nb, Mo, Mg, W, Na, and Pt, and 0<a≤0.5, 0<β≤1, 0≤p≤0.01, 0<q≤0.8, 0<r≤0.8, 0≤s≤0.01, and q+r+s=1.

The M² is a doping element, and specifically, the M² may be one or more selected from the group consisting of Zr, Al, Re, V, Cr, Fe, Ga, Si, B, Ru, Ti, Nb, Mo, Mg, W, Na, and Pt. Although not necessarily included, if the M² is included in an appropriate amount, the particle shape of the positive electrode active material may be improved, and the stability of the crystal structure may be improved.

The α represents a molar ratio of the Li₂MnO₃ phase on the lithium composite transition metal oxide, and may be greater than 0, 0.4 or greater, or 0.43 or greater, and may be 0.47 or less, 0.48 or less, or 0.5 or less. If the α satisfies the above-described range, a high energy density per unit volume may be exhibited, thereby implementing high-capacity properties. In addition, capacity properties, resistance properties, lifespan properties, and the like of the battery including the positive electrode active material may be further improved.

The 1-p is a molar ratio of Mn among all metals excluding lithium on Li₂MnO₃.

The p is a molar ratio of M² among all metals excluding lithium on Li₂MnO₃, and may be 0 or greater, 0.002 or greater, 0.004 or greater, or 0.006 or greater, and may be 0.008 or less, or 0.01 or less. Although not necessarily included, if the M² is included in an appropriate amount, the particle shape of the positive electrode active material may be improved, and the stability of the crystal structure may be improved. In addition, a high energy density may be exhibited, thereby implementing high-capacity properties.

The β represents a molar ratio of LiMO₂ phase in the lithium composite transition metal oxide, and may be greater than 0, 0.2 or greater, or 0.4 or greater, and may be 0.6 or less, 0.8 or less, or 1 or less. If the β satisfies the above-described range, a high energy density per unit volume may be exhibited, thereby implementing high-capacity properties. In addition, capacity properties, resistance properties, lifespan properties, and the like of the battery including the positive electrode active material may be further improved.

The q is a molar ratio of nickel (Ni) among all metals excluding lithium on LiMO₂, and may be greater than 0, 0.4 or greater, or 0.5 or greater, and may be 0.6 or less, 0.7 or less, or 0.8 or less. If the q satisfies the above-described range, a high energy density may be exhibited, thereby implementing high-capacity properties.

The r is a molar ratio of manganese (Mn) among all metals excluding lithium on LiMO₂, and may be greater than 0, 0.3 or greater, or 0.4 or greater, and may be 0.5 or less, 0.6 or less, or 0.8 or less. If the r satisfies the above-described range, a high energy density may be exhibited, thereby implementing high-capacity properties.

The s is a molar ratio of M² among all metals excluding lithium on LiMO₂, and may be 0 or greater, 0.002 or greater, 0.004 or greater, or 0.006 or greater, and may be 0.008 or less, or 0.01 or less. Although not necessarily included, if the M² is included in an appropriate amount, the particle shape of the positive electrode active material may be improved, and the stability of the crystal structure may be improved.

In Formula 2 above, the q, r, and s are q+r+s=1.

According to an embodiment of the present invention, the coating layer may include V₂O₅. In this case, structural stability may be improved, thereby minimizing structural changes of particles, and lifespan properties may be improved. Specifically, the coating layer may be composed only of V₂O₅, or may be in a form in which V₂O₅ and LiMn₂O₄ are mixed.

According to an embodiment of the present invention, the content of the coating layer may be, based on 100 parts by weight of the lithium composite transition metal oxide, 0.01 parts by weight or greater, 0.015 parts by weight or greater, or 0.017 parts by weight or greater, and may be 0.018 parts by weight or less, 0.02 parts by weight or less, 0.05 parts by weight or less, or 0.1 parts by weight or less. If the content of the coating layer is within the above-described range, lithium ion absorption and release performance, electrical conductivity, and structural stability are improved while maintaining energy density per volume of the positive electrode active material, so that capacity properties, resistance properties, and lifespan properties of a battery including the positive electrode active material may be improved.

According to an embodiment of the present invention, the positive electrode active material may have an average particle diameter (D₅₀) of 1.0 µm or greater, 2.0 µm or greater, 3.0 µm or greater, or 4.0 µm or greater, and 10.0 µm or less, 11.0 µm or less, 12.0 µm or less, 13.0 µm or less, 14.0 µm or less, or 15.0 µm or less. If the average particle diameter (D₅₀) is within the above-described range, excellent electrode density may be implemented, and structural stability may be improved.

### Method for preparing positive electrode active material

Next, a method for preparing a positive electrode active material of the present invention will be described. The method for preparing a positive electrode active material of the present invention is a method for preparing the positive electrode active material according to the present invention.

The method for preparing a positive electrode active material includes (A) mixing and then firing a composite transition metal hydroxide and a lithium (Li)-containing raw material to prepare a lithium composite transition metal oxide, and (B) mixing and then heat-treating the lithium composite transition metal oxide and a vanadium (V)-containing raw material to form a coating layer including a compound composed of vanadium (V) and oxygen (O) on the lithium composite transition metal oxide.

The positive electrode active material may be prepared by appropriately adjusting the type of raw materials, mixing ratio of raw materials, firing temperature, firing and heat-treatment temperature increase rate, firing and heat-treatment time, and the like according to the present invention.

Hereinafter, each step of the present invention will be described in detail.

### Step (A)

Step (A) above of mixing and then firing a composite transition metal hydroxide and a lithium (Li)-containing raw material to prepare a lithium composite transition metal oxide is included.

The composite transition metal hydroxide may be prepared through a co-precipitation reaction by introducing a composite transition metal aqueous solution, an ammonium cation complex forming agent, and a basic compound to a reactor.

The composite transition metal aqueous solution may be prepared by dissolving a transition metal-containing raw material in a solvent such as water, and for example, may be prepared by dissolving a nickel (Ni)-containing raw material and a manganese (Mn)-containing raw material in water. In addition, if necessary, the composite transition metal aqueous solution may further include a metal-containing raw material.

The nickel (Ni)-containing raw material may be at least one selected from the group consisting of NiSO₄, NiO, Ni(OH)₂, NiO·OH, NiCO₃·2Ni(OH)₂·4H₂O, NiC₂O₄·2H₂O, Ni(NO₃)₂·6H₂O, a fatty acid nickel, and a nickel halide, and any one thereof or a mixture of two or more thereof may be used. In consideration of a strong base used to adjust the pH in the co-precipitation reaction, specifically, NiSO₄ may be used.

The manganese (Mn)-containing raw material may be at least one selected from the group consisting of MnSO₄, MnCO₃, Mn₂O₃, MnO₂, Mn₃O₄, Mn(NO₃)₂, manganese acetate, manganese dicarboxylic acid, manganese citrate, a manganese salt of manganese fatty acid , an oxyhydroxide, and a halide of manganese chloride, and one thereof or a mixture of two or more thereof may be used. In consideration of a strong base used to adjust the pH in the co-precipitation reaction, specifically, MnSO₄ may be used.

The nickel (Ni)-containing raw material and the manganese (Mn)-containing raw material may be used in an appropriate content in consideration of the content of each metal element in the composite transition metal hydroxide.

Meanwhile, the ammonium cation complex forming agent may include at least one compound selected from the group consisting of NH₄OH, (NH₄)₂SO₄, NH₄NO₃, NH₄Cl, CH₃COONH₄, and NH₄CO₃, and the compound may be introduced in the form of a solution in which the compound is dissolved in a solvent into a reactor. At this time, as the solvent, water, or a mixture of an organic solvent (for example, an alcohol, etc.) which may be uniformly mixed with water and water may be used.

The basic compound may be at least one compound selected from the group consisting of NaOH, KOH, and Ca(OH)₂, and the compound may be introduced in the form of a solution in which the compound is dissolved in a solvent into a reactor. At this time, as the solvent, water, or a mixture of an organic solvent (for example, an alcohol, etc.) which may be uniformly mixed with water and water may be used.

When the composite transition metal aqueous solution, the ammonium cation complex forming agent, and the basic compound are introduced into the reactor as described above, precursor particles in the form of a composite transition metal hydroxide are produced due to a co-precipitation reaction between transition metal ions in the composite transition metal aqueous solution and hydroxide ions of the basic compound.

The co-precipitation reaction may be performed for 50 hours to 90 hours. If the time is within the above-described time range, the crystallinity of the precursor particles is adjusted to a sufficient degree.

In this case, the basic compound may be introduced in an amount such that the pH of a reaction solution is within a desired range.

When the precursor particles are formed by the above-described method, the particles are separated from the reaction solution to obtain a composite transition metal hydroxide. Specifically, the reaction solution may be filtered to separate the particles from the reaction solution, and then the separated particles may be washed with water and dried to obtain a composite transition metal hydroxide. In this case, if necessary, a process such as pulverization and/or classification may be performed.

The composite transition metal hydroxide including nickel and manganese may have a composition represented by Niₓ₁Mn_{y1}M³_{z1}(OH)₂ (wherein M³ is one or more selected from the group consisting of Zr, Al, Re, V, Cr, Fe, Ga, Si, B, Ru, Ti, Nb, Mo, Mg, W, Na, Pt, and 0<x1≤0.5, 0.5≤y1<1, and 0≤z1≤0.01.).

The lithium (Li)-containing raw material may be at least one selected from the group consisting of LiOH, Li₂CO₃, LiNO₃, LiNO₂, LiOH·H₂O, LiH, LiF, LiCl, LiBr, LiI, CH₃COOLi, Li₂O, acetic acid Li, dicarboxylic acid Li, citric acid Li, fatty acid Li, alkyllithium, and lithium halide, and any one thereof or a mixture of two or more thereof may be used. In consideration of performing heat-treatment at a high temperature of about 910 °C, specifically, LiOH may be used.

The mixing may be performed by dry mixing or wet mixing. If each component is mixed through the dry mixing, a firing process may be performed without a separate drying process. If each component is mixed through the wet mixing, the each component may be prepared by being added to a solvent, specifically water, or a mixture of an organic solvent (specifically, an alcohol, etc.) which may be uniformly mixed with water and water, or a solution including each raw material, specifically an aqueous solution, may be prepared and mixed, and then mixed components are spray-dried, and then subjected to a firing process. Each of the raw materials and the composite transition metal hydroxide may be used in an appropriate amount in consideration of the content of each metal element in a lithium composite transition metal oxide to be finally prepared.

According to the present invention, in Step (A), a composite transition metal hydroxide not including cobalt, but including nickel and manganese, and a lithium (Li) containing raw material may be mixed in an amount to have a composition represented by Formula 1 above.

The firing may be performed under an atmospheric atmosphere. In this case, it is easy to maintain a firing atmosphere, and is advantageous from an economical perspective.

The firing may be performed at a temperature of 700 °C or higher, 750 °C or higher, 800 °C or higher, 850 °C or higher, or 900 °C or higher, and may be performed at a temperature of 950 °C or lower, or 1,000 °C or lower. If within the above-described temperature range, it is possible to form a Li₂MnO₃ phase and a LiMO₂ (in which case, M is an element including Ni, Mn, or a combination thereof) phase in an appropriate ratio.

The firing may be performed for 7 hours to 10 hours. If within the above-described time range, the crystallinity of lithium composite transition metal oxide particles is controlled to a sufficient degree, which is advantageous for the transport of lithium ions.

### Step (B)

Thereafter, Step (B) above of mixing and then heat-treating the lithium composite transition metal oxide and the vanadium (V)-containing raw material to form a coating layer including a compound composed of vanadium (V) and oxygen (O) on the lithium composite transition metal oxide is included.

The vanadium (V)-containing raw material may be at least one selected from the group consisting of V₂O₅, vanadium sulfide, vanadium acetylacetonate, and vanadium oxide, and one thereof or a mixture of two or more thereof may be used. Specifically, in consideration of economic feasibility and processibility, V₂O₅ may be used.

The vanadium (V)-containing raw material may be mixed such that the content of vanadium (V) is 100 ppm or greater, and 950 ppm or less, 1,000 ppm or less, 1,500 ppm or less, 2,000 ppm or less, or 2,500 ppm or less based on the total weight of the lithium composite transition metal oxide.

The heat-treatment may be performed at a temperature of 400 °C or higher, 450 °C or higher, 500 °C or higher, and 550°C or lower, or 600 °C or lower. By performing the heat-treatment as described above, sufficient heat energy required for the coating may be supplied. If the heat-treatment temperature is lower than 400 °C., sufficient heat energy that is required for the coating may not be supplied, so that a coating layer may not be formed, and if the heat-treatment temperature is higher than 600 °C, not only the vanadium (V)-containing raw material but also the lithium composite transition metal oxide may be over-fired, so that a secondary phase may be formed.

If the lithium composite transition metal oxide and the vanadium (V)-containing raw material are mixed and then heat-treated in the above-described temperature range, there may be a coating layer including a compound composed of vanadium (V) and oxygen (O) may be formed on the lithium composite transition metal oxide. The coating layer including a compound composed of vanadium (V) and oxygen (O) may be in a form of partially covering at least a portion on the lithium composite transition metal oxide, that is, a region on the lithium composite transition metal oxide, or covering the entire region. The shape of the coating layer may be an island type, a film type, or a combination thereof, but the shape of the coating layer is not limited thereto. The structure of the coating layer including a compound consisting of vanadium (V) and oxygen (O) may be a layered structure, an olivine structure, an orthorhombic structure, a monoclinic structure, or the like, but is not a spinel structure.

The heat-treatment may be performed under an oxygen atmosphere. In this case, an oxidizing atmosphere is created, which may be suitable for forming a coating layer including a compound composed of vanadium (V) and oxygen (O).

The coating layer may include V₂O₅. In this case, lithium ion absorption and release performance, electrical conductivity, and structural stability are improved, so that capacity properties, resistance properties, and lifespan properties of a battery including the positive electrode active material may be improved. Specifically, the coating layer may be composed only of V₂O₅ or may be in a form in which V₂O₅ and LiMn₂O₄ are mixed.

### Positive electrode

Next, a positive electrode according to the present invention will be described.

The positive electrode according to the present invention includes a positive electrode active material layer having the positive electrode active material according to the present invention. Specifically, the positive electrode includes a positive electrode current collector, and a positive electrode active material layer formed on the positive electrode current collector and including the positive electrode active material. Since the positive electrode active material has been described above, a detailed description thereof will be omitted, and hereinafter, only the rest of the components will be described in detail.

The positive electrode current collector is not particularly limited as long as it has conductivity without causing a chemical change in a battery, and for example, stainless steel, aluminum, nickel, titanium, fired carbon, or aluminum or stainless steel that is surface-treated with one of carbon, nickel, titanium, silver, and the like may be used. Also, the positive electrode current collector may typically have a thickness of 3 µm to 500 µm, and microscopic irregularities may be formed on the surface of the current collector to improve the adhesive force of the positive electrode active material. For example, the positive electrode current collector may be used in various forms such as a film, a sheet, a foil, a net, a porous body, a foam, and a non-woven body.

The positive electrode active material layer may include a conductive material and a binder, together with the positive electrode active material. In this case, the positive electrode active material may be included in an amount of 80 wt% to 99 wt%, more specifically 85 wt% to 98.5 wt%, based on the total weight of the positive electrode active material layer, and within this range, excellent capacity properties may be exhibited.

The conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, and carbon fiber; metal powder or metal fiber of such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may be included in an amount of 0.1 wt% to 15 wt% based on the total weight of the positive electrode active material layer.

The binder serves to improve the bonding between positive electrode active material particles and the adhesion between the positive electrode active material and the current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used. The binder may be included in an amount of 0.1 wt% to 15 wt% based on the total weight of the positive electrode active material layer.

The positive electrode may be manufactured according to a typical method for manufacturing a positive electrode except that the positive electrode active material described above is used. Specifically, the positive electrode may be manufactured by applying a composition for forming a positive electrode active material layer, which is prepared by dissolving or dispersing the positive electrode active material described above, and optionally, a binder and a conductive material in a solvent, on a positive electrode current collector, followed by drying and roll-pressing. In this case, the type and content of the positive electrode active material, the binder, and the conductive material are as described above. In addition, in another method, the positive electrode may be manufactured by casting the composition for forming a positive electrode active material layer on a separate support, and then laminating a film obtained by being peeled off from the support, on a positive electrode current collector.

The solvent may be a solvent commonly used in the art, and may be dimethyl sulfoxide (DMSO), isopropyl alcohol, N-methylpyrrolidone (NMP), acetone, water, or the like, and any one thereof or a mixture of two or more thereof may be used. The solvent may be used in an amount sufficient to dissolve or disperse the positive electrode active material, the conductive material, and the binder in consideration of the application thickness and preparation yield of a slurry, and to allow the slurry to have a viscosity which may exhibit excellent thickness uniformity when applied for the manufacturing of the positive electrode later.

### Lithium secondary battery

Next, a lithium secondary battery according to the present invention will be described.

The present invention may manufacture an electrochemical device including the positive electrode. Specifically, the electrochemical device may be a battery, a capacitor, or the like, and more specifically, may be a lithium secondary battery.

Specifically, the lithium secondary battery includes a positive electrode, a negative electrode positioned opposing the positive electrode, a separator interposed between the positive electrode and the negative electrode, and an electrolyte, and since the positive electrode is the same as described above, a detailed description thereof will be omitted, and hereinafter, only the rest of the components will be described in detail.

Also, the lithium secondary battery may optionally further include a battery case for accommodating an electrode assembly of the positive electrode, the negative electrode, and the separator, and a sealing member for sealing the battery case.

In the above-described lithium secondary battery, the negative electrode includes a negative electrode current collector, and a negative electrode active material layer positioned on the negative electrode current collector.

The negative electrode current collector is not particularly limited as long as it has high conductivity without causing a chemical change in a battery, and for example, copper, stainless steel, aluminum, nickel, titanium, fired carbon, copper or stainless steel that is surface-treated with one of carbon, nickel, titanium, silver, and the like, an aluminum-cadmium alloy, and the like may be used. Also, the negative electrode current collector may typically have a thickness of 3 µm to 500 µm, and as in the case of the positive electrode current collector, microscopic irregularities may be formed on the surface of the current collector to improve the binding force of a negative electrode active material. For example, the negative electrode current collector may be used in various forms such as a film, a sheet, a foil, a net, a porous body, a foam, and a non-woven body.

The negative electrode active material layer optionally includes a binder and a conductive material, together with the negative electrode active material.

As the negative electrode active material, a compound capable of reversible intercalation and de-intercalation of lithium may be used. Specific examples thereof may include a carbonaceous material such as artificial graphite, natural graphite, graphitized carbon fiber, or amorphous carbon; a metallic compound alloyable with lithium such as Si, Al, Sn, Pb, Zn, Bi, In, Mg, Ga, Cd, an Si alloy, an Sn alloy, or an Al alloy; a metal oxide capable of doping and undoping lithium such as SiO_{β}(0<β< 2), SnO₂, a vanadium oxide, or a lithium vanadium oxide; or a composite including the metallic compound and the carbonaceous material such as an Si-C composite or an Sn-C composite, and any one thereof or a mixture of two or more thereof may be used. Also, a metal lithium thin film may be used as the negative electrode active material. Also, low crystalline carbon, high crystalline carbon, and the like may all be used as a carbon material. Representative examples of the low crystalline carbon may include soft carbon and hard carbon, and representative examples of the high crystalline carbon may include irregular, planar, flaky, spherical, or fibrous natural graphite or artificial graphite, Kish graphite, pyrolytic carbon, mesophase pitch-based carbon fiber, meso-carbon microbeads, mesophase pitches, and high-temperature fired carbon such as petroleum or coal tar pitch derived cokes.

The negative electrode active material may be included in an amount of 80 wt% to 99 wt% based on the total weight of the negative electrode active material layer.

The binder is a component for assisting in binding between a conductive material, an active material, and a current collector, and may typically be added in an amount of 0.1 wt% to 10 wt% based on the total weight of the negative electrode active material layer. Examples of the binder may include polyvinylidene fluoride (PVDF), polyvinyl alcohol, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber, nitrile-butadiene rubber, fluorine rubber, various copolymers thereof, and the like.

The conductive material is a component for further improving the conductivity of the negative electrode active material, and may be added in an amount of 10 wt% or less, specifically 5 wt% or less, based on the total weight of the negative electrode active material layer. The conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; conductive fiber such as carbon fiber and metal fiber; fluorocarbon; metal powder such as aluminum powder, and nickel powder; a conductive whisker such as zinc oxide and potassium titanate; a conductive metal oxide such as titanium oxide; and a conductive material such as a polyphenylene derivative, or the like may be used.

The negative electrode active material layer may be prepared by applying a composition for forming a negative electrode active material layer, which is prepared by dissolving or dispersing a negative electrode active material, and optionally, a binder and a conductive material in a solvent, on a negative electrode current collector, followed by drying, or may be prepared by casting the composition for forming a negative electrode active material layer on a separate support, and then laminating a film obtained by being peeled off from the support, on a negative electrode current collector.

Meanwhile, in the above-described lithium secondary battery, the separator is to separate the negative electrode and the positive electrode and to provide a movement path for lithium ions, and any separator typically used as a separator in a lithium secondary battery may be used without particular limitation, and particularly, a separator having excellent moisture-retention ability for an electrolyte while having low resistance to the movement of electrolyte ions is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, or an ethylene/methacrylate copolymer, or a stacked structural body having two or more layers thereof may be used. In addition, a typical porous non-woven fabric, for example, a non-woven fabric made of glass fiber having a high melting point, polyethylene terephthalate fiber, or the like may be used. Also, a coated separator including a ceramic component or a polymer material may be used to secure heat resistance or mechanical strength, and may optionally be used in a single-layered or multi-layered structure.

In addition, the electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the manufacturing of a lithium secondary battery, but is not limited thereto.

Specifically, the electrolyte may include an organic solvent and a lithium salt.

As the organic solvent, any organic solvent may be used without particular limitation as long as it can serve as a medium through which ions involved in an electrochemical reaction of a battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (wherein R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among the above, the carbonate-based solvent is preferred, and a mixture of a cyclic carbonate (e.g., ethylene carbonate or propylene carbonate) having high ion conductivity and a high dielectric constant, which may increase charge/discharge performance of the battery, and a low-viscosity linear carbonate-based compound (e.g., ethylmethyl carbonate, dimethyl carbonate, diethyl carbonate, or the like) is more preferred. In this case, the performance of the electrolyte solution may be exhibited excellent when the cyclic carbonate and the chain carbonate are mixed in a volume ratio of about 1:1 to about 1:9.

As the lithium salt, any compound may be used without particular limitation as long as it can provide lithium ions used in a lithium secondary battery. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, LiB(C₂O₄)₂, or the like may be used. It is good that the lithium salt is used in a concentration range of 0.1 M to 5.0 M, specifically, 0.1 M to 3.0 M. If the concentration of the lithium salt is included in the above-described range, the electrolyte has suitable conductivity and viscosity, and thus, may exhibit excellent electrolyte performance, and lithium ions may effectively move.

In order to improve lifespan properties of a battery, suppress a decrease in battery capacity, improve discharge capacity of the battery, and the like, the electrolyte may further include one or more kinds of additives, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, aluminum trichloride, and the like. In this case, the additive may be included in an amount of 0.1 wt% to 10 wt%, specifically, 0.1 wt% to 5 wt%, based on the total weight of the electrolyte.

The lithium secondary battery including the positive electrode active material according to the present invention as describe above exhibits excellent resistance properties and capacity properties, and has a relatively low resistance increase rate, and thus, are useful for portable devices such as a mobile phone, a notebook computer, and a digital camera, and in the field of electric cars such as a hybrid electric vehicle (HEV) .

Accordingly, according to another embodiment of the present invention, a battery module including the lithium secondary battery as a unit cell, and a battery pack including the battery module are provided.

The battery module or the battery pack may be used as a power source of one or more medium-and-large-sized devices such as a power tool, an electric car including an electric vehicle (EV), a hybrid electric vehicle (HEV), and a plug-in hybrid electric vehicle (PHEV), or a power storage system.

The external shape of the lithium secondary battery of the present invention is not particularly limited, but may be a cylindrical shape using a can, a square shape, a pouch shape, a coin shape, or the like.

The lithium secondary battery according to the present invention may be used in a battery cell which is used as a power source for a small-sized device, and may also be preferably used as a unit cell for a medium- and large-sized battery module including a plurality of battery cells.

Hereinafter, embodiments of the present invention will be described in detail so that those skilled in the art may easily carry out the present invention. However, the present invention may be embodied in many different forms, and is not limited to the embodiments set forth herein.

### MDOE FOR CARRYING OUT THE INVENTION

### Preparation Examples

### Preparation Example 1

NiSO₄ and MnSO₄ were dissolved in deionized water such that the molar ratio of nickel:manganese was 0.35:0.65, thereby preparing a 2.4 M composite transition metal aqueous solution. An introduction tube of each of the composite transition metal aqueous solution and a 25 wt% NaoH aqueous solution was connected to a 10 L continuous stirred tank reactor. 2.6 L of deionized water and 3.5 mL of a 25 wt% NaOH aqueous solution were added to the reactor, maintained at 50 °C, and stirred at 150 rpm to prepare an initial solution having a pH of 12.0 to 13.0 (based on 25°C conversion). In addition, in order to remove dissolved oxygen and create a non-oxidizing atmosphere inside the reactor, a N₂ gas was purged at 2 L/min. Thereafter, while stirring at 1,000 rpm, the composition ratio of the gas introduced into the reactor was changed from 100% of N₂ to N₂:atmosphere ratio from 99.5:0.5 to 85.0:15.0 to create a weak oxygen atmosphere, and the composite transition metal aqueous solution was continuously injected into the reactor at a flow rate of 0.85 L/hr. The introduction amount of NaOH and RPM were controlled such that the pH reached 10.0 to 11.0 within 1 hour to 2 hours from the start of the reaction, thereby generating composite transition metal hydroxide seeds having a size of 0.1 µm to 1 µm. Thereafter, while maintaining the pH at 10.0 to 11.0 for 80 hours, composite transition metal hydroxide particles were grown by a co-precipitation reaction, and raw material introduction was terminated when a target particle diameter (4 µm) was reached. Thereafter, the particles were separated from the reaction solution, and then washed and dried to prepare a composite transition metal hydroxide having a composition of Ni_{0.35}Mn_{0.65}(OH)₂.

### Preparation Example 2

The introduction amount of NaOH and RPM were controlled such that the pH reached 10.0 to 11.0 within 1 hour to 2 hours from the start of the reaction, thereby generating composite transition metal hydroxide seeds having a size of 3 µm to 5 µm. Thereafter, a composite transition metal hydroxide having a composition of Ni_{0.35}Mn_{0.65}(OH)₂ was prepared in the same manner as in Preparation Example 1, except that while maintaining the pH at 10.0 to 11.0 for 60 hours, composite transition metal hydroxide particles were grown by a co-precipitation reaction, and raw material introduction was terminated when a target particle diameter (10 µm) was reached.

### Examples and Comparative Examples

### Example 1

LiOH and Ni_{0.35}Mn_{0.65}(OH)₂ prepared in Preparation Example 1 were mixed such that the molar ratio of Li: (Ni+Mn) was 1.32:1, and under an atmospheric atmosphere, the mixture was fired at 910 °C to prepare a lithium composite transition metal oxide having a composition represented by Li_{1.14}Ni_{0.3}Mn_{0.56}O₂. In this case, the lithium composite transition metal oxide has a composition represented by 0.47(Li₂MnO₃)·1.0(LiNi_{0.51}Mn_{0.49}O₂).

The lithium composite transition metal oxide and V₂O₅ were mixed, and under an oxygen atmosphere, the mixture was heat-treated at 500 °C to prepare a positive electrode active material having a coating layer including V₂O₅ formed on the lithium composite transition metal oxide. In this case, the V₂O₅ was mixed such that the content of vanadium (V) was 100 ppm based on the total weight of the lithium composite transition metal oxide.

### Example 2

A positive electrode active material was prepared in the same manner as in Example 1, except that V₂O₅ was mixed such that the content of vanadium (V) was 1,000 ppm based on the total weight of the lithium composite transition metal oxide.

### Example 3

A positive electrode active material was prepared in the same manner as in Example 1, except that V₂O₅ was mixed such that the content of vanadium (V) was 2,000 ppm based on the total weight of the lithium composite transition metal oxide.

### Example 4

LiOH and Ni_{0.35}Mn_{0.65}(OH)₂ prepared in Preparation Example 2 were mixed such that the molar ratio of Li: (Ni+Mn) was 1.31:1, and under an atmospheric atmosphere, the mixture was fired at 910 °C to prepare a lithium composite transition metal oxide having a composition represented by Li_{1.13}Ni_{0.3}Mn_{0.57}O₂. In this case, the lithium composite transition metal oxide has a composition represented by 0.43(Li₂MnO₃)·1.0(LiNi_{0.51}Mn_{0.49}O₂).

The lithium composite transition metal oxide and V₂O₅ were mixed, and under an oxygen atmosphere, the mixture was heat-treated at 500 °C to prepare a positive electrode active material having a coating layer including V₂O₅ formed on the lithium composite transition metal oxide. In this case, the V₂O₅ was mixed such that the content of vanadium (V) was 100 ppm based on the total weight of the lithium composite transition metal oxide.

### Example 5

A positive electrode active material was prepared in the same manner as in Example 4, except that V₂O₅ was mixed such that the content of vanadium (V) was 1,000 ppm based on the total weight of the lithium composite transition metal oxide.

### Example 6

A positive electrode active material was prepared in the same manner as in Example 4, except that V₂O₅ was mixed such that the content of vanadium (V) was 2,000 ppm based on the total weight of the lithium composite transition metal oxide.

### Comparative Example 1

LiOH and Ni_{0.35}Mn_{0.65}(OH)₂ prepared in Preparation Example 1 were mixed such that the molar ratio of Li: (Ni+Mn) was 1.32:1, and under an atmospheric atmosphere, the mixture was fired at 910 °C to prepare a lithium composite transition metal oxide having a composition represented by Li_{1.14}Ni_{0.3}Mn_{0.56}O₂.

### Comparative Example 2

A positive electrode active material was prepared in the same manner as in Example 1, except that V₂O₅ was mixed such that the content of vanadium (V) was 50 ppm based on the total weight of the lithium composite transition metal oxide.

### Comparative Example 3

A positive electrode active material was prepared in the same manner as in Example 1, except that V₂O₅ was mixed such that the content of vanadium (V) was 3,000 ppm based on the total weight of the lithium composite transition metal oxide.

### Experimental Examples

### Experimental Example 1: XRD analysis

XRD measurement was performed on each of the positive electrode active materials prepared in Examples and Comparative Examples. Thereafter, XRD data of each of the positive electrode active materials prepared in Examples 1 and 2 is shown in FIG. 1.

FIG. 1 is XRD data of positive electrode active materials respectively prepared in Examples 1 and 2.

In this case, the XRD was measured using an X-ray diffraction analysis method by collecting 2 g to 3 g of positive electrode active material particles from each positive electrode active material powder, and using a Cu-Kα ray (wavelength of 1.54 Å) at an acceleration voltage of 40 kV/40 mA at a scan rate of 0.2 °/sec in a 2θ range of 15 ° to 80 °.

Referring to FIG. 1, it was confirmed that the positive electrode active materials prepared in Examples 1 and 2 include both a Li₂MnO₃ phase and a LiMO₂ (in this case, M is an element including Ni, Mn, or a combination thereof) phase. Specifically, the Li₂MnO₃ phase was confirmed to be included using a small peak present at 20 ° to 23 °, and the LiMO₂ (in this case, M is an element including Ni, Mn, or a combination thereof) phase was confirmed to be included using a large peak present at 18 °.

### Experimental Example 2: ICP analysis

0.1 g was taken from each of the lithium composite transition metal oxides and the positive electrode active materials prepared in Examples 1 to 6 and Comparative Examples 1 to 3, and added with 1 mL of hydrochloric acid and heated to dissolve the positive electrode active material. Thereafter, in order to accelerate the reaction, a small amount of hydrogen peroxide water was added to completely dissolve the positive electrode active material, thereby preparing a solution. Then, the solution was diluted with deionized water such that the total volume of the solution was 10 mL, thereby preparing an analysis sample. The weight ratio of constituent elements present in the analysis sample was measured using an ICP device (Perkin Elmer Co., Ltd., OPTIMA 7300DV), and the composition of the lithium composite transition metal oxide, and the content (ppm) of vanadium (V) included in the coating layer are shown in Table 1 below.

**[Table 1]**

| Classification | Lithium composite transition metal oxide composition | V content (ppm) |
|---|---|---|
| Example 1 | Li_{1.14}Ni_{0.3}Mn_{0.56}O₂ | 97 |
| Example 2 | Li_{1.14}Ni_{0.3}Mn_{0.56}O₂ | 985 |
| Example 3 | Li_{1.14}Ni_{0.3}Mn_{0.56}O₂ | 1968 |
| Example 4 | Li_{1.13}Ni_{0.3}Mn_{0.57}O₂ | 100 |
| Example 5 | Li_{1.13}Ni_{0.3}Mn_{0.57}O₂ | 991 |
| Example 6 | Li_{1.13}Ni_{0.3}Mn_{0.57}O₂ | 1973 |
| Comparative Example 1 | Li_{1.14}Ni_{0.3}Mn_{0.56}O₂ | - |
| Comparative Example 2 | Li_{1.14}Ni_{0.3}Mn_{0.56}O₂ | 45 |
| Comparative Example 3 | Li_{1.14}Ni_{0.3}Mn_{0.56}O₂ | 2957 |

Referring to Table 1, the composition of each of Examples 1 to 6 is represented by Formula 1 above, and the content of vanadium (V) included in the coating layer is confirmed to be 90 ppm to 2,500 ppm based on the total weight of the lithium composite transition metal oxide.

### Experimental Example 3: Measurement of content of coating layer

The content of vanadium (V) included in the coating layer of Example 1 was measured by performing Inductively Coupled Plasma-Mass Spectrometer (ICP-MS) analysis.

From the content of vanadium (V) obtained from the measurement results, the contents of a vanadium oxide and a lithium vanadium oxide included in the coating layer were calculated by reverse calculation, and as a result, it was confirmed that the content of the coating layer in Example 1 was 0.0178 parts by weight based on 100 parts by weight of the lithium composite transition metal oxide.

### Experimental Example 4: Measurement of average particle diameter of positive electrode active material

In order to measure the average particle diameter of the positive electrode active material particles prepared in each of Examples 1 to 6 and Comparative Examples 1 to 3, the particle diameter of the positive electrode active material prepared in each of Examples 1 to 6 and Comparative Examples 1 to 3 was measured using PSA (Microtrac Co., Ltd., S3500), and the results are shown in Table 2 below.

**[Table 2]**

| Classification | Average particle diameter (D₅₀) (µm) |
|---|---|
| Example 1 | 4.07 |
| Example 2 | 4.09 |
| Example 3 | 4.07 |
| Example 4 | 9.59 |
| Example 5 | 9.61 |
| Example 6 | 9.58 |
| Comparative Example 1 | 4.08 |
| Comparative Example 2 | 4.08 |
| Comparative Example 3 | 4.07 |

From Table 2, it has been confirmed that the positive electrode active material has an average particle diameter (D₅₀) of 1.0 µm to 15.0 µm.

### Experimental Example 5: Evaluation of cell properties

### Manufacturing of coin-type half-cell

97.5 wt% of the positive electrode active material prepared in each of Examples 1 to 6 and Comparative Examples 1 to 3, 1.0 wt% of Super P as a conductive material, and 1.5 wt% of polyvinylidenefluoride (PVDF) as a binder were mixed in an N-methylpyrrolidone (NMP) solvent to prepare a positive electrode slurry. The prepared positive electrode slurry was applied on one surface of an aluminum current collector, dried at 130°C, and then roll-pressed to manufacture a positive electrode.

A lithium metal electrode was used as a negative electrode, and a porous polyethylene separator was interposed between the positive electrode and the negative electrode to manufacture an electrode assembly. The electrode assembly was placed inside a battery case and an electrolyte solution prepared by dissolving 1 M of LiPF₆ in an organic solvent in which ethylene carbonate (EC):ethyl methyl carbonate (EMC):diethyl carbonate (DEC) were mixed in a volume ratio of 3:4:3 was injected to the battery case to manufacture a coin-type half-cell.

### Evaluation of cell properties

A formation process was performed using the coin-type half-cell including the positive electrode active material manufactured in each of Examples 1 to 6 and Comparative Examples 1 to 3, and then charging was performed to 4.4 V at 25 °C in a CC-CV manner, and then discharging was performed to 2.5 V in a CC manner, thereby performing an initial charging/discharge process, and the charge/discharge capacity and resistance at this time were measured. The measured charge/discharge capacity (mAh/g) and resistance (Ω) are shown in Table 3 below.

By setting charging (0.33 C) to 4.4 V at 25 °C in the CC-CV manner, and then discharging (0.33 C) to 2.5 V in the CC manner as one cycle, a total of 30 cycles of charging and discharging were repeated to measure the resistance in the first cycle and the resistance in the 30-th cycle, and then the percentage of the resistance in the 30-th cycle to the resistance in the first cycle (resistance increase rate (%)) is shown in Table 3 below.

**[Table 3]**

| | Charge and discharge of first cycle | | | Resistance increase rate (%) |
|---|---|---|---|---|
| | @ 0.33 C | | | |
| | Charge capacity (mAh/g) | Discharge capacity (mAh/g) | Resistance (Ω) | |
| Example 1 | 214.5 | 203.8 | 40.36 | 134.8 |
| Example 2 | 216.1 | 205.4 | 39.78 | 131.0 |
| Example 3 | 215.2 | 205.0 | 40.80 | 139.4 |
| Example 4 | 215.3 | 203.0 | 38.18 | 118.2 |
| Example 5 | 216.1 | 204.9 | 37.50 | 112.2 |
| Example 6 | 214.9 | 203.2 | 38.66 | 119.2 |
| Comparative Example 1 | 214.2 | 202.4 | 41.74 | 143.6 |
| Comparative Example 2 | 213.7 | 200.7 | 42.35 | 142.8 |
| Comparative Example 3 | 211.8 | 198.7 | 45.8 | 155.3 |

Referring to Table 3, it has been confirmed that the cells respectively including the positive electrode active materials of Examples 1 to 6 in which the coating layer includes a compound composed of vanadium (V) and oxygen (O), and the content of vanadium (V) included in the coating layer is 90 ppm to 2,500 ppm based on the total weight of the lithium composite transition metal oxide have excellent charge/discharge capacity and resistance of the first cycle compared to the cell including the positive electrode active material of Comparative Example 1 in which a coating layer is not included, and the cells respectively including the positive electrode active materials of Comparative Examples 2 and 3 in which the content of vanadium (V) included in the coating layer is less than 90 ppm or greater than 2,500 ppm. On the contrary, in the case of the cells respectively including the positive electrode active materials of Comparative Examples 1 to 3, it has been confirmed that the resistance increase rate was significantly high in the 30-th cycle, which is problematic. In conclusion, it can be seen that the positive electrode active material according to the present invention may improve the charge/discharge capacity and electrical conductivity of a battery, and does not have a significant structural change even during a charge/discharge cycle.

## Claims

1. A positive electrode active material comprising:
a lithium composite transition metal oxide including both a Li₂MnO₃ phase and a LiMO₂ (in this case, M is an element including Ni, Mn, or a combination thereof) phase; and
a coating layer including a compound composed of vanadium (V) and oxygen (O) on the lithium composite transition metal oxide,
wherein:
the lithium composite transition metal oxide has a composition represented by Formula 1 below; and
the content of vanadium (V) included in the coating layer is 90 ppm to 2,500 ppm based on the total weight of the lithium composite transition metal oxide:
[Formula 1] Li₁₊ₓNiₐMn_{b}M¹_{c}O₂
wherein in Formula 1 above,
M¹ is one or more selected from the group consisting of Zr, Al, Re, V, Cr, Fe, Ga, Si, B, Ru, Ti, Nb, Mo, Mg, W, Na, and Pt, and
0<x≤0.5, 0<a≤0.5, 0.5≤b<1, and 0≤c≤0.01.

2. The positive electrode active material of claim 1, wherein the lithium composite transition metal oxide has a composition represented by Formula 2 below:
[Formula 2] αLi₂Mn₍₁₋ₚ₎M²ₚO₃·βLiNi_{q}MnᵣM²ₛO₂
wherein in Formula 2 above,
M² is one or more selected from the group consisting of Zr, Al, Re, V, Cr, Fe, Ga, Si, B, Ru, Ti, Nb, Mo, Mg, W, Na, and Pt, and
0<α≤0.5, 0<β≤1, 0≤p≤0.01, 0<q≤0.8, 0<r≤0.8, 0≤s≤0.01, and q+r+s=1.

3. The positive electrode active material of claim 1, wherein the b is 0.5 to 0.75.

4. The positive electrode active material of claim 1, wherein the coating layer comprises V₂O₅.

5. The positive electrode active material of claim 1, wherein the content of the coating layer is 0.01 parts by weight to 0.1 parts by weight based on 100 parts by weight of the lithium composite transition metal oxide.

6. The positive electrode active material of claim 1, wherein the positive electrode active material has an average particle diameter (D₅₀) of 1.0 µm to 15.0 µm.

7. A method for preparing the positive electrode active material of claim 1, the method comprising:
(A) mixing and then firing a composite transition metal hydroxide and a lithium (Li)-containing raw material to prepare a lithium composite transition metal oxide; and
(B) mixing and then heat-treating the lithium composite transition metal oxide and a vanadium (V)-containing raw material to form a coating layer including a compound composed of vanadium (V) and oxygen (O) on the lithium composite transition metal oxide, wherein the heat-treatment is performed at a temperature of 400 °C to 600 °C.

8. The method of claim 7, wherein the vanadium (V)-containing raw material is V₂O₅.

9. The method of claim 7, wherein the vanadium (V)-containing raw material is mixed such that the content of vanadium (V) is 100 ppm to 2,500 ppm based on the total weight of the lithium composite transition metal oxide.

10. The method of claim 7, wherein in Step (B), the heat-treatment is performed under an oxygen atmosphere.

11. The method of claim 7, wherein the coating layer comprises V₂O₅.

12. A positive electrode comprising the positive electrode active material according to any one of claim 1 to claim 6.

13. A lithium secondary battery comprising the positive electrode according to claim 12.
